# EUROPÄISCHE PATENTSCHRIFT

(11) **EP 3 050 751 B1**
(45) Veröffentlichungstag und Bekanntmachung des Hinweises auf die Patenterteilung: **24.08.2022**
(21) Anmeldenummer: 16000177.2
(22) Anmeldetag: 26.01.2016
(51) Int. Cl.: B60Q 1/32, B60Q 1/46, B60P 1/64

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR DE VÉHICULE AUTOMOBILE, EN PARTICULIER D'UN VÉHICULE UTILITAIRE

(30) Priorität: 29.01.2015 DE 102015001051
(43) Veröffentlichungstag der Anmeldung: 03.08.2016
(73) Patentinhaber: MAN Truck & Bus SE, 80995 München (DE)
(72) Erfinder: Knobel, Michael, D-80999 München (DE)
(74) Vertreter: Liebl, Thomas

(56) Entgegenhaltungen:
- EP-A1- 2 722 228
- DE-A1- 10 237 669
- DE-A1-102005 037 710
- DE-A1-102007 006 263
- DE-U1- 29 518 569
- US-A- 3 647 014
- US-A- 4 964 022
- US-A1- 2013 265 789
- US-A1- 2014 297 173
- US-B1- 8 552 852

## Beschreibung

Die Erfindung betrifft zwei alternative Verfahren zur Unterstützung eines Fahrers eines Nutzfahrzeugs nach den Patentansprüchen 1 und 8 und ein Nutzfahrzeug zur Durchführung der Verfahren nach Patentanspruch 14.

Es ist bekannt, bei Fahrzeugen, insbesondere bei Nutzfahrzeugen, seitlich außen am Fahrzeug Seitenmarkierungsleuchten vorzusehen, mittels denen das Fahrzeug äußerlich sichtbar markiert bzw. gekennzeichnet werden kann. Mittels derartiger Seitenmarkierungsleuchten wird dabei üblicherweise bei eingeschalteten Standlicht des Fahrzeugs ein dauerhaftes Lichtsignal angezeigt. Bei Nutzfahrzeugen, insbesondere bei Lastkraftwagen, sind regelmäßig mehrere Seitenmarkierungsleuchten, in Fahrzeug-Querrichtung gesehen, seitlich außen an jeder Fahrzeugseite angeordnet.

Des Weiteren ist es auch bekannt, die Beleuchtung der Seitenmarkierungsleuchten mittels einer Regel- und/oder Steuereinrichtung zu regeln bzw. zu steuern, so dass mittels der Seitenmarkierungsleuchten nicht nur ein einziges, sondern mehrere unterschiedliche Lichtsignale angezeigt werden können.

Eine derartige Regelung bzw. Steuerung ist beispielsweise aus der Druckschrift DE 10 2007 006 263 A1 bekannt, die eine Seitenbeleuchtung für einen Lastkraftwagen offenbart, bei der wenigstens eine an einer Fahrzeugaußenseite des Lastkraftwagens angeordnete, als Leuchtband ausgebildete Leuchteinheit vorgesehen ist. Mittels des Leuchtbands kann dabei beispielsweise je nach gewünschtem Lichteffekt bzw. nach gewünschter Lichtintensität ein weißes oder ein andersfarbiges Licht wiedergegeben werden. Zudem kann das Leuchtband auch in Abhängigkeit eines Signals einer Steuereinheit eines Fahrtrichtungsanzeigers des Fahrzeugs gesteuert bzw. geregelt werden. Auf diese Weise kann beispielsweise bei einer Betätigung eines Blinkerhebels des Fahrzeugs nicht nur der Fahrtrichtungsanzeiger, sondern das gesamte Leuchtband die Richtungsanzeige darstellen.

Aufgabe der Erfindung ist es, ein Verfahren und eine Vorrichtung zur Unterstützung eines Fahrers eines Fahrzeugs, insbesondere eines Nutzfahrzeugs, bereitzustellen, bei denen die Funktion der Seitenmarkierungsleuchten auf einfache Weise erweitert bzw. verbessert ist. Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Verfahren zur Unterstützung eines Fahrers eines Nutzfahrzeugs vorgeschlagen, wobei das Fahrzeug, in Fahrzeug-Querrichtung gesehen, seitlich außen an jeder Fahrzeugseite jeweils wenigstens eine Seitenmarkierungsleuchte aufweist, und wobei eine Regel- und/oder Steuereinrichtung vorgesehen ist, mittels der die Beleuchtung der Seitenmarkierungsleuchten geregelt oder gesteuert ist.

Erfindungsgemäß wird die Regel- und/oder Steuereinrichtung bei einer Warnsituation des Fahrzeugs in einen Warnblinkmodus geschaltet, in dem die Seitenmarkierungsleuchten so angesteuert werden, dass diese ein blinkendes Warnsignal anzeigen. Auf diese Weise ist die Funktion der Seitenmarkierungsleuchten auf einfache Weise erweitert bzw. verbessert, da nun mit den an beiden Fahrzeugseiten vorgesehenen Seitenmarkierungsleuchten ein blinkendes Warnsignal angezeigt wird, wenn sich das Fahrzeug in einer Warnsituation befindet. Durch das Blinken der Seitenmarkierungsleuchten werden, insbesondere in Verbindung mit einer herkömmlichen Warnblinkanlage, sich in der Umgebung des Fahrzeugs befindlichen Personen besonders deutlich und zuverlässig vor der Warnsituation bzw. vor dem Fahrzeug gewarnt.

Bevorzugt ist eine durch den Fahrer des Fahrzeugs betätigbare Betätigungseinrichtung, insbesondere ein Taster und/oder ein Schalter, vorgesehen, durch deren Betätigung die Regel- und/oder Steuereinrichtung in den Warnblinkmodus geschaltet wird und/oder durch deren Betätigung der Warnblinkmodus ausgeschaltet wird. Auf diese Weise kann der Fahrer des Fahrzeugs den Warnblinkmodus jederzeit ein- und/oder ausschalten, wenn er dies wünscht. So kann er den Warnblinkmodus beispielsweise einschalten, wenn das Fahrzeug liegengeblieben ist oder wenn Reparaturarbeiten am Fahrzeug durchgeführt werden müssen. Ebenso kann der Fahrer den Warnblinkmodus beispielsweise ausschalten, wenn er die Anzeige des blinkenden Warnsignals mittels der Seitenmarkierungsleuchten nicht für notwendig erachtet.

Erfindungsgemäß weist das Fahrzeug eine Be- und/oder Entladevorrichtung auf, mittels der das Fahrzeug be- und/oder entladen werden kann, wobei eine Be- und/oder Entladeerkennungs-Einrichtung vorgesehen ist, mittels der ein Be- und/oder Entladevorgang des Fahrzeugs erkannt und/oder erfasst wird, wobei die Regel- und/oder Steuereinrichtung bei einem erkannten und/oder erfassten Be- und/oder Entladevorgang selbsttätig bzw. automatisch in den Warnblinkmodus schaltet. Auf diese Weise wird zuverlässig sichergestellt, dass der Warnblinkmodus während eines, ein hohes Gefahrenpotential aufweisenden Be- und/oder Entladevorgangs des Fahrzeugs eingeschaltet wird.

In einer bevorzugten Verfahrensführung wird zum Beladen des Fahrzeugs wenigstens eine an einem außerhalb des Fahrzeugs angeordneten Abstellbereich abgestellte Transporteinrichtung, insbesondere ein Container, mittels der Be- und/oder Entladevorrichtung auf einer Ladefläche des Fahrzeugs abgestellt und/oder angeordnet. Ebenso kann zum Entladen des Fahrzeugs wenigstens eine auf einer Ladefläche des Fahrzeugs angeordnete Transporteinrichtung, insbesondere Container, mittels der Be- und/oder Entladevorrichtung an einem außerhalb des Fahrzeugs angeordneten Aufstellbereich abgestellt werden. Derartige Be- und/oder Entladevorgänge weisen ein besonders hohes Gefahrenpotential auf, wodurch das Einschalten des Warnblinkmodus hier besonders wichtig ist. Zur Durchführung eines derartigen Be- und/oder Entladevorgangs kann das Fahrzeug beispielsweise als Abrollkipper oder als Absetzkipper ausgebildet sein.

In einer ersten erfindungsgemäßen Ausführung weist die Be- und/oder Entladevorrichtung eine Niveauregulierungs-Einrichtung auf, mittels der zum Be- und/oder Entladen des Fahrzeugs das Fahrzeugniveau ausgehend von einer Grundstellung bzw. einer Fahrstellung definiert verstellt wird, wobei bevorzugt vorgesehen ist, das mittels der Be- und/oder Entladeerkennungs-Einrichtung das aktuelle Fahrzeugniveau ermittelt werden kann. Mittels des aktuellen Fahrzeugniveaus kann der Be- und/oder Entladevorgang zuverlässig und einfach mit der Be- und/oder Entladeerkennungs-Einrichtung erkannt bzw. erfasst werden. Bevorzugt kann das aktuelle Fahrzeugniveau dabei über wenigstens einen aktuellen hydraulischen und/oder pneumatischen Druckwert der hydraulisch und/oder pneumatisch betätigbaren Niveauregulierungs-Einrichtung mittels der Be- und/oder Entladeerkennungs-Einrichtung ermittelt werden. Über einen derartigen Druckwert kann das aktuelle Fahrzeugniveau zuverlässig und einfach ermittelt werden. Bevorzugt ist dabei vorgesehen, dass die Be- und/oder Entladeerkennungs-Einrichtung eine Messeinrichtung aufweist, mittels der der wenigstens eine hydraulische und/oder pneumatische Druckwert gemessen werden kann.

Auf diese Weise kann der wenigstens eine hydraulische und/oder pneumatische Druckwert besonders einfach ermittelt werden.

In einer bevorzugten Verfahrensführung wird zum Beladen des Fahrzeugs das Fahrzeugniveau ausgehend von der Grundstellung zunächst mittels der Niveauregulierungs-Einrichtung abgesenkt. Anschließend wird das Fahrzeug mit seiner Ladefläche unter die an dem Abstellbereich abgestellte Transporteinrichtung gefahren und schließlich das Fahrzeugniveau unter Aufnahme der Transporteinrichtung mittels der Niveauregulierungs-Einrichtung wieder in die Grundstellung angehoben. Bevorzugt ist dabei vorgesehen, dass die Regel- und/oder Steuereinrichtung unmittelbar nach oder während des Absenkens des Fahrzeugniveaus selbsttätig in den Warnblinkmodus schaltet und spätestens nach dem Anheben des Fahrzeugniveaus in die Grundstellung der Warnblinkmodus wieder ausgeschaltet wird. Auf diese Weise wird der Warnblinkmodus zuverlässig dann eingeschaltet, wenn der Beladevorgang mittels der Niveauregulierungs-Einrichtung ein besonders hohes Gefahrenpotential aufweist.

Ebenso kann zum Entladen des Fahrzeugs das Fahrzeugniveau ausgehend von der Grundstellung zunächst unter Abstellung einer auf der Ladefläche des Fahrzeugs angeordneten Transporteinrichtung an dem Abstellbereich mittels der Niveauregulierungs-Einrichtung abgesenkt werden. Anschließend wird das Fahrzeug von dem Abstellbereich weggefahren und schließlich das Fahrzeugniveau mittels der Niveauregulierungs-Einrichtung wieder in die Grundstellung angehoben. Bevorzugt ist dabei vorgesehen, dass die Regel- und/oder Steuereinrichtung spätestens während des Absenkens des Fahrzeugniveaus selbsttätig bzw. automatisch in den Warnblinkmodus schaltet und spätestens nach dem Anheben des Fahrzeugniveaus in die Grundstellung der Warnblinkmodus wieder ausgeschaltet wird.

Vorzugsweise ist eine durch den Fahrer des Fahrzeugs betätigbare Betätigungseinrichtung, insbesondere ein Taster und/oder ein Schalter, vorgesehen, durch deren Betätigung das verstellte Fahrzeugniveau wieder in die Grundstellung gebracht werden kann, wobei die Regel- und/oder Steuereinrichtung bei einer Betätigung der Betätigungseinrichtung selbsttätig bzw. automatisch den Warnblinkmodus ausschaltet. Durch die Betätigung einer derartigen Betätigungseinrichtung signalisiert der Fahrer des Fahrzeugs zuverlässig, dass der Be- und/oder Entladevorgang und somit auch die Warnsituation beendet ist. Die selbsttätige Ausschaltung des Warnblinkmodus gewährleistet dann ein besonders komfortables und zuverlässiges Ausschalten des Warnblinkmodus.

Gemäß einer zweiten erfindungsgemäßen Ausführung ist eine durch den Fahrer des Fahrzeugs betätigbare Betätigungseinrichtung, insbesondere ein Taster und/oder ein Schalter, vorgesehen, durch deren Betätigung eine Druckerzeugungs-Einrichtung, insbesondere eine Pumpe, der hydraulisch und/oder pneumatisch betätigbaren Be- und/oder Entladevorrichtung zur Erzeugung eines hydraulischen und/oder pneumatischen Drucks aktivierbar und/oder deaktivierbar ist.

Bevorzugt schaltet die Regel- und/oder Steuereinrichtung bei einer Aktivierung der Druckerzeugungs-Einrichtung dann selbsttätig bzw. automatisch in den Warnblinkmodus. Durch die Aktivierung der Druckerzeugungs-Einrichtung signalisiert der Fahrer des Fahrzeugs zuverlässig und eindeutig, dass ein Beladevorgang des Fahrzeugs gestartet wird. Alternativ und/oder zusätzlich kann die Regel- und/oder Steuereinrichtung bei einer Deaktivierung der Druckerzeugungs-Einrichtung selbsttätig bzw. automatisch den Warnblinkmodus ausschalten. Dadurch wird zuverlässig und eindeutig signalisiert, dass der Be- und/oder Entladevorgang beendet ist.

Weiter bevorzugt ist eine durch den Fahrer des Fahrzeugs betätigbare Betätigungseinrichtung, insbesondere ein Taster und/oder ein Schalter, vorgesehen, durch deren Betätigung eine Warnblinkanlage des Fahrzeugs aktiviert und/oder deaktiviert werden kann.

Bevorzugt schaltet die Regel- und/oder Steuereinrichtung dann bei einer Aktivierung der Warnblinkanlage selbsttätig bzw. automatisch in den Warnblinkmodus. Auf diese Weise kann der Fahrer durch die Aktivierung der Warnblinkanlage mittels der Betätigungseinrichtung auch die Regel- und/oder Steuereinrichtung in den Warnblinkmodus schalten. Alternativ und/oder zusätzlich kann die Regel- und/oder Steuereinrichtung bei einer Deaktivierung der Warnblinkanlage den Warnblinkmodus auch selbsttätig bzw. automatisch ausschalten. So schaltet der Fahrer bei einer Deaktivierung der Warnblinkanlage mittels der Betätigungseinrichtung auch den Warnblinkmodus aus.

Erfindungsgemäß schaltet die Regel- und/oder Steuereinrichtung, sofern der Warnblinkmodus ausgeschaltet und ein Fahrlicht des Fahrzeugs eingeschaltet ist, selbsttätig bzw. automatisch in einen Grundmodus, in dem die Seitenmarkierungsleuchten so angesteuert werden, dass diese ein dauerhaftes Lichtsignal anzeigen. Auf diese Weise wird das Fahrzeug mittels der Seitenmarkierungsleuchten mit einem dauerhaften Lichtsignal markiert bzw. gekennzeichnet, wenn sich das Fahrzeug nicht in einer Warnsituation befindet. Das Fahrlicht kann dabei beispielsweise durch ein Standlicht, Abblendlicht, oder ein Fernlicht des Fahrzeugs gebildet sein. Bevorzugt wird es jedoch durch das Standlicht des Fahrzeugs gebildet.

Zur Lösung der bereits genannten Aufgabe wird ferner eine Vorrichtung zur Unterstützung eines Fahrers eines Fahrzeugs, insbesondere eines Nutzfahrzeugs, vorgeschlagen, wobei das Fahrzeug, in Fahrzeug-Querrichtung gesehen, seitlich außen an jeder Fahrzeugseite jeweils wenigstens eine Seitenmarkierungsleuchte aufweist, und wobei eine Regel- und/oder Steuereinrichtung vorgesehen ist, mittels der die Beleuchtung der Seitenmarkierungsleuchten geregelt und/oder gesteuert werden kann. Erfindungsgemäß kann die Regel- und/oder Steuereinrichtung bei einer Warnsituation des Fahrzeugs in einen Warnblinkmodus geschaltet werden, in dem die Seitenmarkierungsleuchten so mittels der Regel- und/oder Steuereinrichtung angesteuert werden können, dass diese ein blinkendes Warnsignal anzeigen.

Die sich durch die Vorrichtung ergebenden Vorteile sind identisch mit den bereits gewürdigten Vorteilen des erfindungsgemäßen Verfahrens, so dass diese an dieser Stelle nicht wiederholt werden.

Des Weiteren wird auch ein Nutzfahrzeug zur Durchführung der erfindungsgemäßen Verfahren beansprucht. Die sich hieraus ergebenden Vorteile sind identisch mit den Vorteilen des erfindungsgemäßen Verfahrens und der Vorrichtung, so dass auch diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Seitenansicht eine erste Ausführungsform eines Lastkraftwagens mit der Vorrichtung;
- Fig. 2: in einer Darstellung von oben den Lastkraftwagen gemäß Fig. 1;
- Fig. 3: ein Diagramm, anhand dem der Aufbau der Vorrichtung des Lastkraftwagens gemäß Fig. 1 erläutert wird;
- Fig. 4: ein Diagramm, anhand dem der Ablauf des erfindungsgemäßen Verfahrens erläutert wird;
- Fig. 5: Seitenansichten einer zweiten Ausführungsform eines Lastkraftwagens mit der Vorrichtung; und
- Fig. 6: ein Diagramm, anhand dem der Aufbau der Vorrichtung des Lastkraftwagens gemäß Fig. 5 erläutert wird.

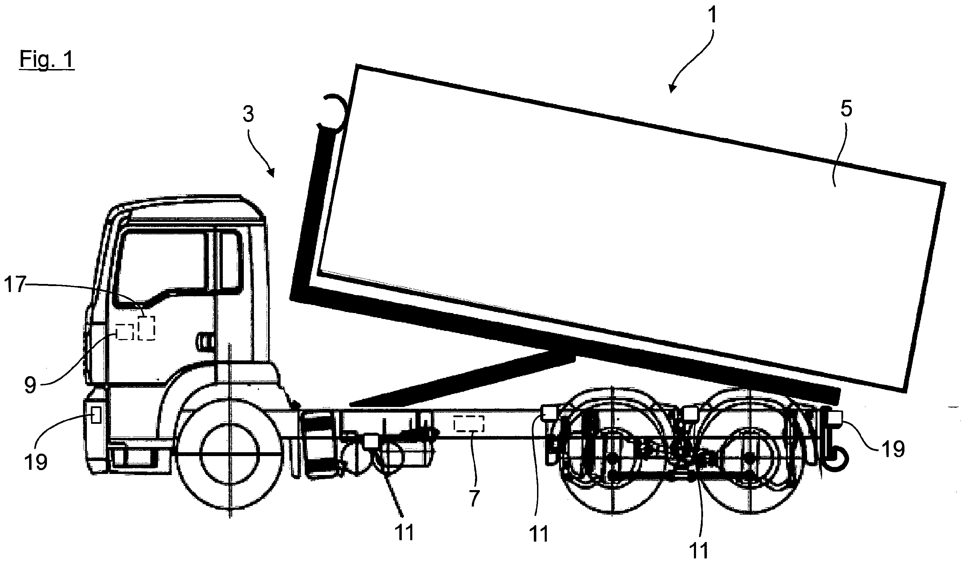

In Fig. 1 ist ein hier beispielhaft als Lastkraftwagen 1 ausgebildetes Fahrzeug gezeigt. Der Lastkraftwagen 1 weist eine in Fig. 1 lediglich schematisch angedeutete Be- und Entladevorrichtung 3 auf, mittels der der Lastkraftwagen 1 be- und entladen werden kann. Konkret ist der Lastkraftwagen 1 hier beispielhaft als Abrollkipper ausgebildet, der mit einem Abrollcontainer 5 beladen werden kann. Alternativ könnte der Lastkraftwagen 1 hier beispielsweise auch als Absetzkipper ausgebildet sein. Die Be- und Entladevorrichtung 3 ist hier beispielhaft hydraulisch betätigbar und weist eine hier beispielshaft als Pumpe 7 ausgebildete Druckerzeugungs-Einrichtung auf, mittels der eine Hydraulikflüssigkeit der hydraulisch betätigbaren Be- und Entladevorrichtung 3 mit Druck beaufschlagt werden kann. Die Pumpe 7 kann hier mittels einer in Fig. 1 mit gestrichelten Linien angedeuteten, durch den Fahrer des Lastkraftwagens 1 betätigbare Betätigungseinrichtung 9 aktiviert und deaktiviert werden. Die Betätigungseinrichtung 9 kann dabei beispielsweise als Taster oder als Schalter ausgebildet sein.

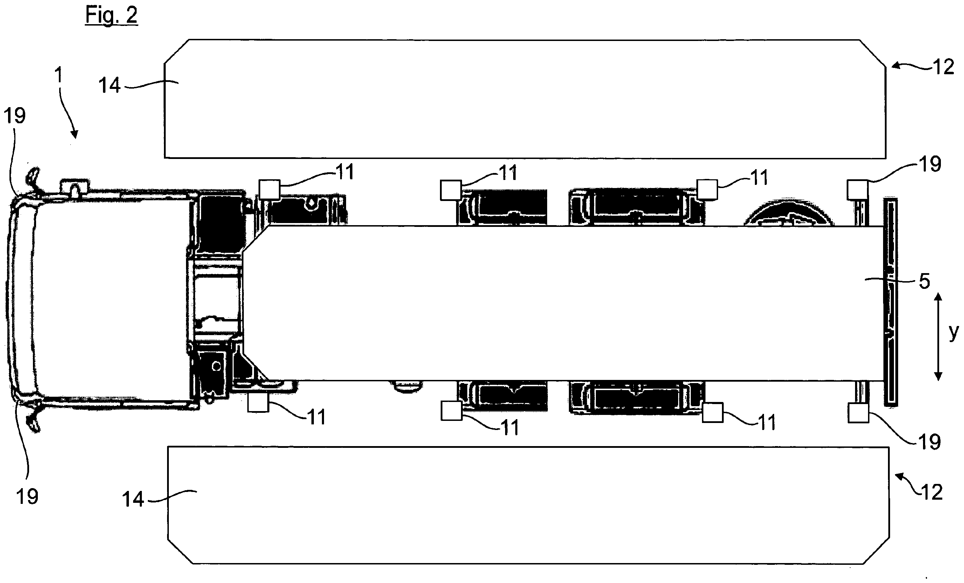

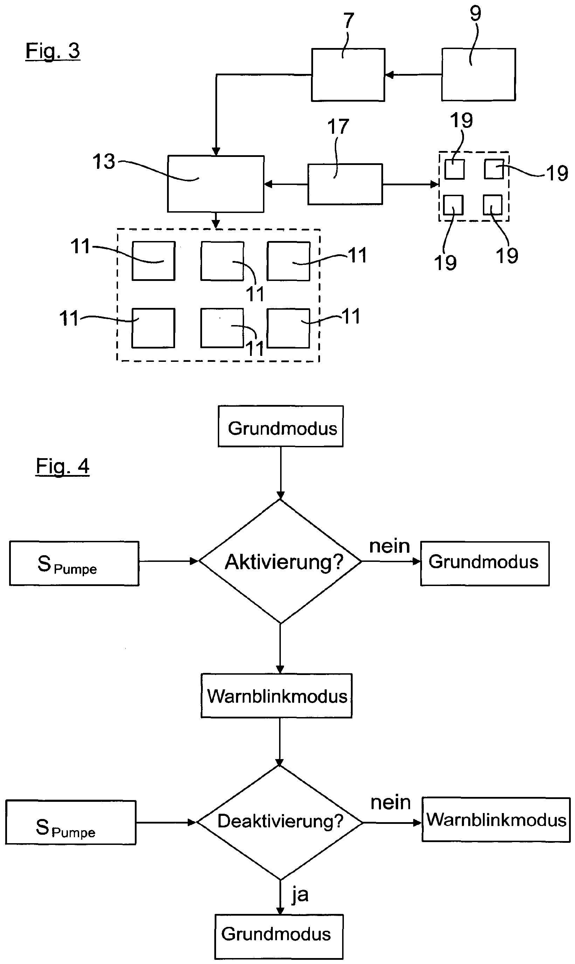

Wie insbesondere in Fig. 2 gezeigt ist, weist der Lastkraftwagen 1 auch mehrere, hier beispielhaft sechs, Seitenmarkierungsleuchten 11 auf, mittels denen der Lastkraftwagen 1 äußerlich sichtbar markiert bzw. gekennzeichnet werden kann. Dabei sind hier beispielhaft, in Fahrzeug-Querrichtung y gesehen, seitlich außen an jeder Fahrzeugseite 12 mehrere Seitenmarkierungsleuchten 11 vorgesehen. Die Beleuchtung der Seitenmarkierungsleuchten 11 wird mittels einer in Fig. 3 gezeigten Regel- und/oder Steuereinrichtung 13 geregelt bzw. gesteuert. Die Regel- und/oder Steuereinrichtung 13 kann hier beispielhaft in einen Grundmodus geschaltet werden, in dem die Seitenmarkierungsleuchten 11 derart von der Regel- und/oder Steuereinrichtung 13 angesteuert werden, dass diese ein dauerhaftes Lichtsignal anzeigen. Zudem kann die Regel- und/oder Steuereinrichtung 13 auch in einen Warnblinkmodus geschaltet werden, in dem die Seitenmarkierungsleuchten 11 derart von der Regel- und/oder Steuereinrichtung 13 angesteuert werden, dass diese ein blinkendes Warnsignal anzeigen. Der Warnblinkmodus wird nur dann eingeschaltet, wenn sich der Lastkraftwagen 1 in einer Warnsituation befindet. Befindet sich der Lastkraftwagen 1 nicht in einer Warnsituation schaltet die Regel- und/oder Steuereinrichtung 13 hier beispielhaft selbsttätig bzw. automatisch in den Grundmodus. Warnsituationen sind hier beispielhaft durch einen Beladevorgänge und einen Entladevorgänge des Lastkraftwagens 1 gebildet. Durch das Blinken der Seitenmarkierungsleuchten 11 wird dabei sichergestellt, dass sich in der Umgebung des Lastkraftwagens 1 befindliche Personen während eines Be- oder Entladevorgangs des Lastkraftwagens 1 von Gefahrenbereichen 14 fernhalten.

Wie in Fig. 3 gezeigt ist, ist die Regel- und/oder Steuereinrichtung 13 hier auch signaltechnisch mit der Pumpe 7 verbunden. Dadurch wird der Regel- und/oder Steuereinrichtung 13 eine Aktivierung und eine Deaktivierung der Pumpe 7 signalisiert bzw. mitgeteilt. Wird die Pumpe 7 durch den Fahrer des Lastkraftwagens 1 aktiviert, ist dies ein eindeutiges Zeichen für den Beginn eines Be- oder Entladevorgangs des Lastkraftwagens 1. Umgekehrt ist die Deaktivierung der Pumpe 7 ein eindeutiges Zeichen für die Beendigung eines Be- oder Entladevorgangs des Lastkraftwagens 1. Bei einer Aktivierung der Pumpe 7 schaltet die Regel- und/oder Steuereinrichtung 13 hier dann selbsttätig bzw. automatisch in den Warnblinkmodus. Bei einer Deaktivierung der Pumpe 7 schaltet die Regel- und/oder Steuereinrichtung 13 hier selbsttätig bzw. automatisch den Warnblinkmodus aus und den Grundmodus ein.

Nachfolgend wird diese Verfahrensführung anhand der Fig. 4 nochmals zusammenfassend erläutert:
In einer Ausgangssituation befindet sich die Regel- und/oder Steuereinrichtung 13 in dem Grundmodus, in dem die Seitenmarkierungsleuchten 11 ein dauerhaftes Lichtsignal anzeigen. Die Pumpe 7 ist dabei deaktiviert. Sofern der Regel- und/oder Steuereinrichtung 13 dann keine Aktivierung der Pumpe 7 mittels eines Signals S_{Pumpe} der Pumpe 7 signalisiert wird, verbleibt die Regel- und/oder Steuereinrichtung 13 in dem Grundmodus. Sofern der Regel- und/oder Steuereinrichtung 13 mittels des Signals S_{Pumpe} eine Aktivierung der Pumpe 7 signalisiert wird, schaltet die Regel- und/oder Steuereinrichtung 13 selbsttätig bzw. automatisch in den Warnblinkmodus. Hat die Regel- und/oder Steuereinrichtung 13 in den Warnblinkmodus geschaltet, verbleibt sie in dem Warnblinkmodus, wenn der Regel- und/oder Steuereinrichtung 13 keine Deaktivierung der Pumpe 7 mittels des Signals S_{Pumpe} der Pumpe 7 signalisiert wird. Wird der in den Warnblinkmodus geschalteten Regel- und/oder Steuereinrichtung 13 eine Deaktivierung der Pumpe 7 mittels des Signals S_{Pumpe} der Pumpe 7 signalisiert, schaltet die Regel- und/oder Steuereinrichtung 13 wieder in den Grundmodus.

Wie in Fig. 3 weiter gezeigt wird, weist der Lastkraftwagen 1 hier beispielhaft auch eine durch den Fahrer des Lastkraftwagens 1 betätigbare Betätigungseinrichtung 17, beispielsweise einen Taster oder einen Schalter, auf, durch deren Betätigung eine herkömmliche Warnblinkanlage des Lastkraftwagens 1 aktiviert und deaktiviert werden kann. Bei einer derartigen Aktivierung werden alle, hier beispielhaft vier, Fahrtrichtungsanzeiger 19 des Lastkraftwagens 1 eingeschaltet, so dass diese ein blinkendes Warnsignal anzeigen. Die Betätigungseinrichtung 17 ist hier weiter auch derart signaltechnisch mit der Regel- und/oder Steuereinrichtung 13 verbunden, dass der Regel- und/oder Steuereinrichtung 13 mitgeteilt bzw. signalisiert werden, wenn die Warnblinkanlage des Lastkraftwagens 1 aktiviert und deaktiviert wird. Bei einer Aktivierung der Warnblinkanlage schaltet die Regel- und/oder Steuereinrichtung 13 dann selbsttätig bzw. automatisch in den Warnblinkmodus. Bei einer Deaktivierung der Warnblinkanlage schaltet die Regel- und/oder Steuereinrichtung 13 den Warnblinkmodus selbsttätig bzw. automatisch aus und schaltet in den Grundmodus.

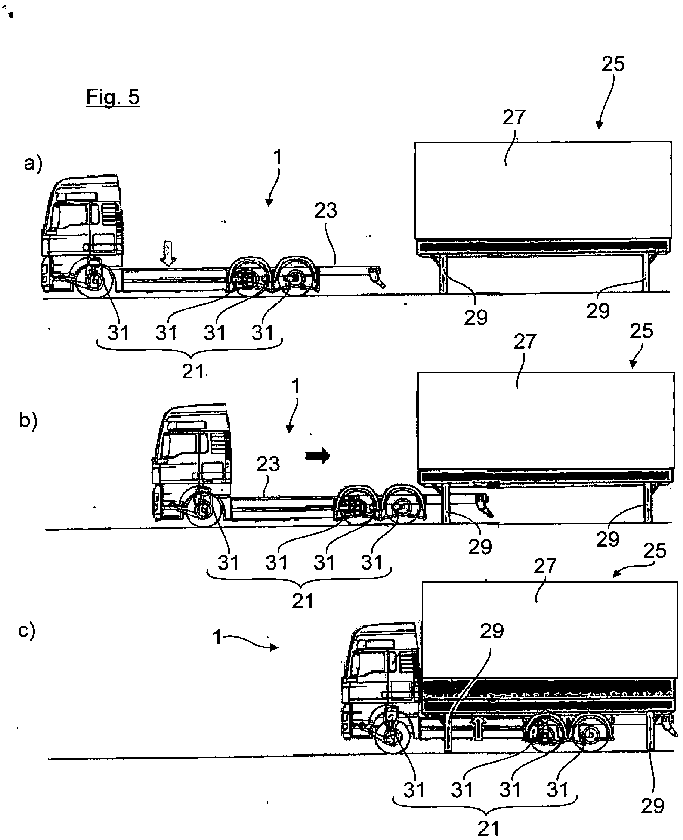

In Fig. 5 ist eine zweite Ausführungsform des Lastkraftwagens 1 gezeigt. Der Lastkraftwagen 1 ist hier, im Vergleich zur ersten Ausführungsform des Lastkraftwagens 1, nicht als Abrollkipper ausgebildet. Anstelle dessen weist der in Fig. 5 gezeigte Lastkraftwagen 1 eine Niveauregulierungs-Einrichtung 21 auf, mittels der zum Be- und Entladen des Lastkraftwagens 1 das Fahrzeugniveau des Lastkraftwagens 1 ausgehend von einer in Fig. 5c gezeigten Grundstellung bzw. Fahrstellung definiert verstellt wird.

In den Fig. 5a bis 5c ist hier beispielhaft ein Beladevorgang des Lastkraftwagens 1 mittels der Niveauregulierungs-Einrichtung 21 gezeigt. Dabei wird gemäß Fig. 5a zunächst das Fahrzeugniveau des Lastkraftwagens 1 ausgehend von der Grundstellung mittels der Niveauregulierungs-Einrichtung 21 abgesenkt. Anschließend wird der Lastkraftwagen 1 gemäß Fig. 5b mit seiner Ladefläche 23 unter einen an einem Abstellbereich 25 abgestellten Wechselcontainer 27 gefahren. Schließlich wird das Fahrzeugniveau des Lastkraftwagens 1 gemäß Fig. 5c unter Aufnahme des Wechselcontainers 27 wieder in die Grundstellung angehoben. Abschließend werden noch die an dem Wechselcontainer 27 festgelegten Stützen 29 demontiert. Das Entladen des Lastkraftwagens 1 erfolgt in umgekehrter Reihenfolge.

Wie in Fig. 5 weiter gezeigt ist, weist die Niveauregulierungs-Einrichtung 21, hier lediglich beispielhaft, zur Verstellung des Fahrzeugniveaus mehrere, hier beispielhaft acht, als Luftbalgen 31 ausgebildete Hubeinrichtungen auf. Das Fahrzeugniveau des Lastkraftwagens 1 wird hier daher über den Luftdruck in den Luftbalgen 31 gesteuert bzw. geregelt.

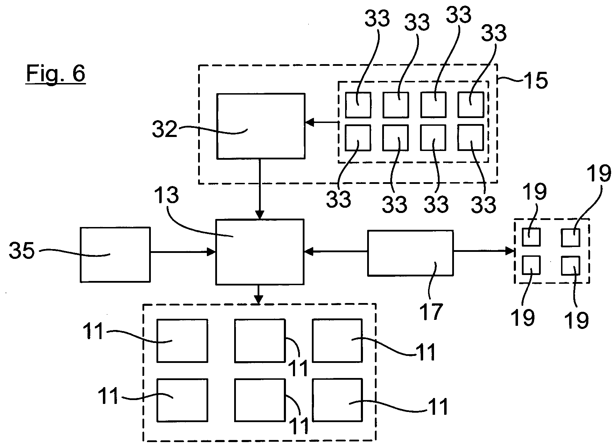

Gemäß Fig. 6 weist die zweite Ausführungsform des Lastkraftwagens 1 eine Be- und Entladeerkennungs-Einrichtung 15 auf, mittels der ein Be- oder Entladevorgang des Lastkraftwagens 1 erkannt bzw. erfasst werden kann. Die Be- und Entladeerkennungs-Einrichtung 15 umfasst hier beispielhaft eine Auswerteeinheit 32 und mehrere signaltechnisch mit der Auswerteeinheit 32 verbundene Messeinrichtungen 33, mittels denen der Luftdruck in den Luftbalgen 31 gemessen wird. Jedem Luftbalg 31 ist dabei jeweils eine Messeinrichtung 33 zugeordnet. Die mittels der Messeinrichtungen 33 gemessenen Luftdrücke werden an die Auswerteeinheit 32 übermittelt, mittels der dann aus den gemessenen Luftdrücken das aktuelle Fahrzeugniveau des Lastkraftwagens 1 ermittelt werden kann. Über das aktuelle Fahrzeugniveaus des Lastkraftwagens 1 kann die Auswerteeinheit 21 dann erkennen bzw. erfassen, ob sich der Lastkraftwagens 1 aktuell in einem Be- oder Entladevorgang befindet oder nicht.

Wie in Fig. 6 weiter gezeigt ist, ist die Auswerteeinheit 32 auch signaltechnisch mit der Regel- und/oder Steuereinrichtung 13 verbunden. Erkennt bzw. erfasst die Be- und Entladeerkennungs-Einrichtung 15 einen Be- oder Entladevorgang des Lastkraftwagens 1, wird dies der Regel- und/oder Steuereinrichtung 13 signalisiert bzw. mitgeteilt. Bei einem erkannten bzw. erfassten Beladevorgang schaltet die Regel- und/oder Steuereinrichtung 13 hier dann unmittelbar nach dem Absenken des Fahrzeugniveaus des Lastkraftwagens 1 selbsttätig bzw. automatisch in den Warnblinkmodus. Bei einem erkannten bzw. erfassten Entladevorgang des Lastkraftwagens 1 schaltet die Regel- und/oder Steuereinrichtung 13 hier während des Absenken des Fahrzeugniveaus selbsttätig bzw. automatisch in den Warnblinkmodus.

Wie in Fig. 6 weiter gezeigt ist, weist der Lastkraftwagen 1 hier beispielhaft auch eine durch den Fahrer des Lastkraftwagens 1 betätigbare Betätigungseinrichtung 35, beispielsweise einen Taster oder einen Schalter auf, durch deren Betätigung das verstellte Fahrzeugniveau des Lastkraftwagens 1 wieder in die Grundstellung gebracht werden kann. Die Betätigungseinrichtung 35 ist hier derart signaltechnisch mit der Regel- und/oder Steuereinrichtung 13 verbunden, dass der Regel- und/oder Steuereinrichtung 13 eine Betätigung der Betätigungseinrichtung 35 mitgeteilt bzw. signalisiert wird. Bei einer Betätigung der Betätigungseinrichtung 35 schaltet die Regel- und/oder Steuereinrichtung 13 hier selbsttätig bzw. automatisch den Warnblinkmodus aus und den Grundmodus ein.

### Bezugszeichenliste

- 1: Lastkraftwagen
- 3: Be- und Entladevorrichtung
- 5: Abrollcontainer
- 7: Pumpe
- 9: Betätigungseinrichtung
- 11: Seitenmarkierungsleuchte
- 13: Regel- und/oder Steuereinrichtung
- 14: Gefahrenbereich
- 15: Be- und Entladeerkennungs-Einrichtung
- 17: Betätigungseinrichtung
- 19: Fahrtrichtungsanzeiger
- 21: Niveauregulierungs-Einrichtung
- 23: Ladefläche
- 25: Abstellbereich
- 27: Wechselcontainer
- 29: Stütze
- 31: Luftbalg
- 33: Messeinrichtung
- 35: Betätigungseinrichtung

## Patentansprüche

1. Verfahren zur Unterstützung eines Fahrers eines Nutzfahrzeugs, wobei das Nutzfahrzeug (1), in Fahrzeug-Querrichtung (y) gesehen, seitlich außen an jeder Fahrzeugseite (12) jeweils wenigstens eine Seitenmarkierungsleuchte (11) aufweist, und wobei eine Regel- und/oder Steuereinrichtung (13) vorgesehen ist, mittels der die Beleuchtung der Seitenmarkierungsleuchten (11) geregelt und/oder gesteuert ist, wobei die Regel- und/oder Steuereinrichtung (13) bei einer Warnsituation des Nutzfahrzeugs (1) in einen Warnblinkmodus geschaltet wird, in dem die Seitenmarkierungsleuchten (11) so angesteuert werden, dass diese ein blinkendes Warnsignal anzeigen, und wobei, sofern der Warnblinkmodus ausgeschaltet ist und ein Fahrlicht des Nutzfahrzeugs eingeschaltet ist, die Regel- und/oder Steuereinrichtung (13) selbsttätig in einen Grundmodus schaltet, in dem die Seitenmarkierungsleuchten (11) so angesteuert werden, dass diese ein dauerhaftes Lichtsignal anzeigen,
wobei das Nutzfahrzeug (1) eine Be- und/oder Entladevorrichtung (3) aufweist, mittels der das Nutzfahrzeug (1) be- und/oder entladbar ist, und wobei ein Be- und/oder Entladevorgang des Nutzfahrzeugs (1) eine Warnsituation ausbildet,
wobei eine Be- und/oder Entladeerkennungs-Einrichtung (15) vorgesehen ist, mittels der ein Be- und/oder Entladevorgang des Nutzfahrzeugs (1) erkannt und/oder erfasst wird, wobei die Regel- und/oder Steuereinrichtung (13) bei einem erkannten und/oder erfassten Be- und/oder Entladevorgang selbsttätig in den Warnblinkmodus schaltet, und
wobei die Be- und/oder Entladevorrichtung (3) eine Niveauregulierungs-Einrichtung (21) aufweist, mittels der zum Be- und/oder Entladen des Nutzfahrzeugs (1) das Nutzfahrzeugniveau ausgehend von einer Grundstellung definiert verstellt wird.

2. Verfahren nach Anspruch 1, **dadurch gekennzeichnet, dass** mittels der Be- und/oder Entladeerkennungs-Einrichtung (15) das aktuelle Nutzfahrzeugniveau ermittelbar ist.

3. Verfahren nach Anspruch 2, **dadurch gekennzeichnet, dass** das aktuelle Nutzfahrzeugniveau über wenigstens einen aktuellen hydraulischen und/oder pneumatischen Druckwert der hydraulisch und/oder pneumatisch betätigbaren Niveauregulierungs-Einrichtung (21) mittels der Be- und/oder Entladeerkennungs-Einrichtung (15) ermittelbar ist, wobei bevorzugt vorgesehen ist, dass die Be- und/oder Entladeerkennungs-Einrichtung (15) eine Messeinrichtung (33) aufweist, mittels der der wenigstens eine aktuelle hydraulische und/oder pneumatische Druckwert messbar ist.

4. Verfahren nach einem der vorhergehenden Ansprüche, **dadurch gekennzeichnet, dass** zum Beladen des Nutzfahrzeugs (1) wenigstens eine an einem außerhalb des Nutzfahrzeugs (1) angeordneten Abstellbereich (25) abgestellte Transporteinrichtung (5, 27), insbesondere ein Container, mittels der Be- und/oder Entladevorrichtung (3) auf einer Ladefläche (23) des Nutzfahrzeugs (1) abgestellt und/oder angeordnet wird.

5. Verfahren nach Anspruch 4, **dadurch gekennzeichnet, dass** zum Beladen des Nutzfahrzeugs (1) das Nutzfahrzeugniveau ausgehend von der Grundstellung zunächst mittels der Niveauregulierungs-Einrichtung (21) abgesenkt wird, dass das Nutzfahrzeug (1) anschließend mit seiner Ladefläche (23) unter die an dem Abstellbereich (25) abgestellte Transporteinrichtung (27) gefahren wird, und dass schließlich das Nutzfahrzeugniveau unter Aufnahme der Transporteinrichtung (27) mittels der Niveauregulierungs-Einrichtung (21) wieder in die Grundstellung angehoben wird, wobei bevorzugt vorgesehen ist, dass die Regel- und/oder Steuereinrichtung (13) unmittelbar nach oder während des Absenkens des Nutzfahrzeugniveaus selbsttätig in den Warnblinkmodus schaltet und spätestens nach dem Anheben des Nutzfahrzeugniveaus in die Grundstellung der Warnblinkmodus wieder ausgeschaltet wird.

6. Verfahren nach Anspruch 4 oder 5, **dadurch gekennzeichnet, dass** zum Entladen des Nutzfahrzeugs (1) das Nutzfahrzeugniveau ausgehend von der Grundstellung zunächst unter Abstellung einer auf der Ladefläche (23) des Nutzfahrzeugs (1) angeordneten Transporteinrichtung (27) an dem Abstellbereich (25) mittels der Niveauregulierungs-Einrichtung (21) abgesenkt wird, dass das Nutzfahrzeug (1) anschließend von dem Abstellbereich (25) weggefahren wird, und dass schließlich das Nutzfahrzeugniveau mittels der Niveauregulierungs-Einrichtung (21) wieder in die Grundstellung angehoben wird, wobei bevorzugt vorgesehen ist, dass die Regel- und/oder Steuereinrichtung (13) spätestens während des Absenkens des Nutzfahrzeugniveaus selbsttätig in den Warnblinkmodus schaltet und spätestens nach dem Anheben des Nutzfahrzeugniveaus in die Grundstellung der Warnblinkmodus wieder ausgeschaltet wird.

7. Verfahren nach einem der Ansprüche 2 bis 6, **dadurch gekennzeichnet, dass** eine durch den Fahrer des Nutzfahrzeugs (1) betätigbare Betätigungseinrichtung (35), insbesondere ein Taster und/oder ein Schalter, vorgesehen ist, durch deren Betätigung das verstellte Nutzfahrzeugniveau wieder in die Grundstellung bringbar ist, wobei die Regel- und/oder Steuereinrichtung (13) bei einer Betätigung der Betätigungseinrichtung (35) selbsttätig den Warnblinkmodus ausschaltet.

8. Verfahren zur Unterstützung eines Fahrers eines Nutzfahrzeugs, wobei das Nutzfahrzeug (1), in Fahrzeug-Querrichtung (y) gesehen, seitlich außen an jeder Fahrzeugseite (12) jeweils wenigstens eine Seitenmarkierungsleuchte (11) aufweist, und wobei eine Regel- und/oder Steuereinrichtung (13) vorgesehen ist, mittels der die Beleuchtung der Seitenmarkierungsleuchten (11) geregelt und/oder gesteuert ist, wobei die Regel- und/oder Steuereinrichtung (13) bei einer Warnsituation des Nutzfahrzeugs (1) in einen Warnblinkmodus geschaltet wird, in dem die Seitenmarkierungsleuchten (11) so angesteuert werden, dass diese ein blinkendes Warnsignal anzeigen, und wobei, sofern der Warnblinkmodus ausgeschaltet ist und ein Fahrlicht des Nutzfahrzeugs eingeschaltet ist, die Regel- und/oder Steuereinrichtung (13) selbsttätig in einen Grundmodus schaltet, in dem die Seitenmarkierungsleuchten (11) so angesteuert werden, dass diese ein dauerhaftes Lichtsignal anzeigen,
wobei das Nutzfahrzeug (1) eine Be- und/oder Entladevorrichtung (3) aufweist, mittels der das Nutzfahrzeug (1) be- und/oder entladbar ist, und wobei ein Be- und/oder Entladevorgang des Nutzfahrzeugs (1) eine Warnsituation ausbildet,
wobei eine Be- und/oder Entladeerkennungs-Einrichtung (15) vorgesehen ist, mittels der ein Be- und/oder Entladevorgang des Nutzfahrzeugs (1) erkannt und/oder erfasst wird, wobei die Regel- und/oder Steuereinrichtung (13) bei einem erkannten und/oder erfassten Be- und/oder Entladevorgang selbsttätig in den Warnblinkmodus schaltet, und
wobei eine durch den Fahrer des Nutzfahrzeugs betätigbare Betätigungseinrichtung (9) vorgesehen ist, durch deren Betätigung eine Druckerzeugungs-Einrichtung (7) der hydraulisch und/oder pneumatisch betätigbaren Be- und/oder Entladevorrichtung (3) zur Erzeugung eines hydraulischen und/oder pneumatischen Drucks aktivierbar und/oder deaktivierbar ist.

9. Verfahren nach Anspruch 8, **dadurch gekennzeichnet, dass** bei einer Aktivierung der Druckerzeugungs-Einrichtung (7) die Regel- und/oder Steuereinrichtung (13) selbsttätig in den Warnblinkmodus schaltet, und/oder dass bei einer Deaktivierung der Druckerzeugungs-Einrichtung (7) die Regel- und/oder Steuereinrichtung (13) selbsttätig den Warnblinkmodus ausschaltet.

10. Verfahren nach einem der vorhergehenden Ansprüche, **dadurch gekennzeichnet, dass** zum Entladen des Nutzfahrzeugs (1) wenigstens eine auf einer Ladefläche (23) des Nutzfahrzeugs (1) angeordnete Transporteinrichtung (5, 27), insbesondere ein Container, mittels der Be- und/oder Entladevorrichtung (3) an einem außerhalb des Nutzfahrzeugs (1) angeordneten Abstellbereich (25) abgestellt wird.

11. Verfahren nach einem der vorhergehenden Ansprüche, **dadurch gekennzeichnet, dass** eine durch den Fahrer des Nutzfahrzeugs betätigbare Betätigungseinrichtung (17), insbesondere ein Taster und/oder ein Schalter, vorgesehen ist, durch deren Betätigung eine Warnblinkanlage (19) des Nutzfahrzeugs (1) aktivierbar und deaktivierbar ist.

12. Verfahren nach Anspruch 11, **dadurch gekennzeichnet, dass** bei einer Aktivierung der Warnblinkanlage (19) die Regel- und/oder Steuereinrichtung (13) selbsttätig in den Warnblinkmodus schaltet, und/oder dass die Regel- und/oder Steuereinrichtung (13) bei einer Deaktivierung der Warnblinkanlage (19) den Warnblinkmodus selbsttätig ausschaltet.

13. Verfahren nach einem der vorhergehenden Ansprüche, **dadurch gekennzeichnet, dass** eine durch den Fahrer des Nutzfahrzeugs (1) betätigbare Betätigungseinrichtung (17), insbesondere ein Taster und/oder ein Schalter, vorgesehen ist, durch deren Betätigung die Regel- und/oder Steuereinrichtung (13) in den Warnblinkmodus geschaltet wird und/oder durch deren Betätigung der Warnblinkmodus ausgeschaltet wird.

14. Nutzfahrzeug zur Durchführung eines Verfahrens nach einem der Ansprüche 1 oder 8, wobei das Nutzfahrzeug (1), in Fahrzeug-Querrichtung (y) gesehen, seitlich außen an jeder Fahrzeugseite (12) jeweils wenigstens eine Seitenmarkierungsleuchte (11) aufweist, und wobei eine Regel- und/oder Steuereinrichtung (13) vorgesehen ist, mittels der die Beleuchtung der Seitenmarkierungsleuchten (11) regelbar und/oder steuerbar ist, wobei die Regel- und/oder Steuereinrichtung (13) bei einer Warnsituation des Nutzfahrzeugs (1) in einen Warnblinkmodus schaltbar ist, in dem die Seitenmarkierungsleuchten (11) so angesteuert werden, dass diese ein blinkendes Warnsignal anzeigen, und wobei, sofern der Warnblinkmodus ausgeschaltet ist und ein Fahrlicht des Nutzfahrzeugs eingeschaltet ist, die Regel- und/oder Steuereinrichtung (13) selbsttätig in einen Grundmodus schaltet, in dem die Seitenmarkierungsleuchten (11) so angesteuert werden, dass diese ein dauerhaftes Lichtsignal anzeigen,
wobei das Nutzfahrzeug (1) eine Be- und/oder Entladevorrichtung (3) aufweist, mittels der das Nutzfahrzeug (1) be- und/oder entladbar ist, und wobei ein Be- und/oder Entladevorgang des Nutzfahrzeugs (1) eine Warnsituation ausbildet,
wobei eine Be- und/oder Entladeerkennungs-Einrichtung (15) vorgesehen ist, mittels der ein Be- und/oder Entladevorgang des Nutzfahrzeugs (1) erkennbar und/oder erfassbar ist, wobei die Regel- und/oder Steuereinrichtung (13) bei einem erkannten und/oder erfassten Be- und/oder Entladevorgang selbsttätig in den Warnblinkmodus schaltet, und
wobei die Be- und/oder Entladevorrichtung (3) eine Niveauregulierungs-Einrichtung (21) aufweist, mittels der zum Be- und/oder Entladen des Nutzfahrzeugs (1) das Nutzfahrzeugniveau ausgehend von einer Grundstellung definiert verstellbar ist, oder wobei eine durch den Fahrer des Nutzfahrzeugs betätigbare Betätigungseinrichtung (9) vorgesehen ist, durch deren Betätigung eine Druckerzeugungs-Einrichtung (7) der hydraulisch und/oder pneumatisch betätigbaren Be- und/oder Entladevorrichtung (3) zur Erzeugung eines hydraulischen und/oder pneumatischen Drucks aktivierbar und/oder deaktivierbar ist.

## Claims

1. Method for assisting a driver of a commercial vehicle, wherein the commercial vehicle (1), as seen in the vehicle transverse direction (y), laterally on the outside on each vehicle side (12) has in each case at least one side marker light (11), and wherein a closed-loop and/or open-loop control device (13) is provided and is used to control the lighting of the side marker lights (11) in a closed-loop and/or open-loop manner, wherein the closed-loop and/or open-loop control device (13), in the event of a warning situation of the commercial vehicle (1), is switched into a warning flashing mode in which the side marker lights (11) are controlled in such a way that they display a flashing warning signal, and wherein, so long as the warning flashing mode is switched off and the headlights of the commercial vehicle are switched on, the closed-loop and/or open-loop control device (13) automatically switches into a basic mode in which the side marker lights (11) are controlled in such a way that they display a permanent light signal, wherein the commercial vehicle (1) has a loading and/or unloading mechanism (3) which can be used to load and/or unload the commercial vehicle (1), and wherein a loading and/or unloading operation of the commercial vehicle (1) constitutes a warning situation, wherein a loading and/or unloading detection device (15) is provided and is used to detect and/or identify a loading and/or unloading operation of the commercial vehicle (1), wherein the closed-loop and/or open-loop control device (13) automatically switches into the warning flashing mode in the event of a loading and/or unloading operation being detected and/or identified, and wherein the loading and/or unloading mechanism (3) has a level control device (21) which is used to adjust the level of the commercial vehicle in a defined manner starting from a basic position in order to load and/or unload the commercial vehicle (1).

2. Method according to Claim 1, **characterized in that** the current level of the commercial vehicle can be determined by means of the loading and/or unloading detection device (15).

3. Method according to Claim 2, **characterized in that** the current level of the commercial vehicle can be determined by means of the loading and/or unloading detection device (15) by way of at least one current hydraulic and/or pneumatic pressure value of the hydraulically and/or pneumatically actuatable level control device (21), wherein provision is preferably made for the loading and/or unloading detection device (15) to have a measuring device (33) which can be used to measure the at least one current hydraulic and/or pneumatic pressure value.

4. Method according to one of the preceding claims, **characterized in that**, in order to load the commercial vehicle (1), at least one transport device (5, 27), in particular a container, that has been set down in a set-down area (25) located outside of the commercial vehicle (1) is set down and/or arranged on a loading area (23) of the commercial vehicle (1) by means of the loading and/or unloading mechanism (3).

5. Method according to Claim 4, **characterized in that**, in order to load the commercial vehicle (1), the level of the commercial vehicle is initially lowered from the basic position by means of the level control device (21), **in that** the commercial vehicle (1) is then driven such that its loading area (23) is underneath the transport device (27) that has been set down in the set-down area (25), and **in that**, upon receiving the transport device (27), the level of the commercial vehicle is finally raised into the basic position again by means of the level control device (21), wherein provision is preferably made for the closed-loop and/or open-loop control device (13) to automatically switch into the warning flashing mode directly after or during the lowering of the level of the commercial vehicle and for the warning flashing mode to be switched off again at the latest after the level of the commercial vehicle has been raised into the basic position.

6. Method according to Claim 4 or 5, **characterized in that**, in order to unload the commercial vehicle (1), upon setting down in the set-down area (25) a transport device (27) that is arranged on the loading area (23) of the commercial vehicle (1), the level of the commercial vehicle is initially lowered from the basic position by means of the level control device (21), **in that** the commercial vehicle (1) is then driven away from the set-down area (25), and **in that** the level of the commercial vehicle is finally raised into the basic position again by means of the level control device (21), wherein provision is preferably made for the closed-loop and/or open-loop control device (13) to automatically switch into the warning flashing mode at the latest during the lowering of the level of the commercial vehicle and for the warning flashing mode to be switched off again at the latest after the level of the commercial vehicle has been raised into the basic position.

7. Method according to one of Claims 2 to 6, **characterized in that** an actuation device (35), in particular a button and/or a switch, that can be actuated by the driver of the commercial vehicle (1) is provided, through the actuation of which the adjusted level of the commercial vehicle can be brought back into the basic position, wherein the closed-loop and/or open-loop control device (13) automatically switches off the warning flashing mode when the actuation device (35) is actuated.

8. Method for assisting a driver of a commercial vehicle, wherein the commercial vehicle (1), as seen in the vehicle transverse direction (y), laterally on the outside on each vehicle side (12) has in each case at least one side marker light (11), and wherein a closed-loop and/or open-loop control device (13) is provided and is used to control the lighting of the side marker lights (11) in a closed-loop and/or open-loop manner, wherein the closed-loop and/or open-loop control device (13), in the event of a warning situation of the commercial vehicle (1), is switched into a warning flashing mode in which the side marker lights (11) are controlled in such a way that they display a flashing warning signal, and wherein, so long as the warning flashing mode is switched off and the headlights of the commercial vehicle are switched on, the closed-loop and/or open-loop control device (13) automatically switches into a basic mode in which the side marker lights (11) are controlled in such a way that they display a permanent light signal, wherein the commercial vehicle (1) has a loading and/or unloading mechanism (3) which can be used to load and/or unload the commercial vehicle (1), and wherein a loading and/or unloading operation of the commercial vehicle (1) constitutes a warning situation, wherein a loading and/or unloading detection device (15) is provided and is used to detect and/or identify a loading and/or unloading operation of the commercial vehicle (1), wherein the closed-loop and/or open-loop control device (13) automatically switches into the warning flashing mode in the event of a loading and/or unloading operation being detected and/or identified, and wherein an actuation device (9) that can be actuated by the driver of the commercial vehicle is provided, through the actuation of which a pressure-generating device (7) of the hydraulically and/or pneumatically actuatable loading and/or unloading mechanism (3) for generating a hydraulic and/or pneumatic pressure can be activated and/or deactivated.

9. Method according to Claim 8, **characterized in that**, upon activation of the pressure-generating device (7), the closed-loop and/or open-loop control device (13) automatically switches into the warning flashing mode, and/or **in that**, upon deactivation of the pressure-generating device (7), the closed-loop and/or open-loop control device (13) automatically switches off the warning flashing mode.

10. Method according to one of the preceding claims, **characterized in that**, in order to unload the commercial vehicle (1), at least one transport device (5, 27), in particular a container, that is arranged on a loading area (23) of the commercial vehicle (1) is set down in a set-down area (25) located outside of the commercial vehicle (1) by means of the loading and/or unloading mechanism (3).

11. Method according to one of the preceding claims, **characterized in that** an actuation device (17), in particular a button and/or a switch, that can be actuated by the driver of the commercial vehicle is provided, through the actuation of which a warning flashing installation (19) of the commercial vehicle (1) can be activated and deactivated.

12. Method according to Claim 11, **characterized in that**, upon activation of the warning flashing installation (19), the closed-loop and/or open-loop control device (13) automatically switches into the warning flashing mode, and/or **in that**, upon deactivation of the warning flashing installation (19), the closed-loop and/or open-loop control device (13) automatically switches off the warning flashing mode.

13. Method according to one of the preceding claims, **characterized in that** an actuation device (17), in particular a button and/or a switch, that can be actuated by the driver of the commercial vehicle (1) is provided, through the actuation of which the closed-loop and/or open-loop control device (13) is switched into the warning flashing mode and/or through the actuation of which the warning flashing mode is switched off.

14. Commercial vehicle for carrying out a method according to either of Claims 1 and 8, wherein the commercial vehicle (1), as seen in the vehicle transverse direction (y), laterally on the outside on each vehicle side (12) has in each case at least one side marker light (11), and wherein a closed-loop and/or open-loop control device (13) is provided and can be used to control the lighting of the side marker lights (11) in a closed-loop and/or open-loop manner, wherein the closed-loop and/or open-loop control device (13), in the event of a warning situation of the commercial vehicle (1), can be switched into a warning flashing mode in which the side marker lights (11) are controlled in such a way that they display a flashing warning signal, and wherein, so long as the warning flashing mode is switched off and the headlights of the commercial vehicle are switched on, the closed-loop and/or open-loop control device (13) automatically switches into a basic mode in which the side marker lights (11) are controlled in such a way that they display a permanent light signal, wherein the commercial vehicle (1) has a loading and/or unloading mechanism (3) which can be used to load and/or unload the commercial vehicle (1), and wherein a loading and/or unloading operation of the commercial vehicle (1) constitutes a warning situation, wherein a loading and/or unloading detection device (15) is provided and can be used to detect and/or identify a loading and/or unloading operation of the commercial vehicle (1), wherein the closed-loop and/or open-loop control device (13) automatically switches into the warning flashing mode in the event of a loading and/or unloading operation being detected and/or identified, and wherein the loading and/or unloading mechanism (3) has a level control device (21) which can be used to adjust the level of the commercial vehicle in a defined manner starting from a basic position in order to load and/or unload the commercial vehicle (1), or wherein an actuation device (9) that can be actuated by the driver of the commercial vehicle is provided, through the actuation of which a pressure-generating device (7) of the hydraulically and/or pneumatically actuatable loading and/or unloading mechanism (3) for generating a hydraulic and/or pneumatic pressure can be activated and/or deactivated.

## Revendications

1. Procédé d'assistance au conducteur d'un véhicule utilitaire, le véhicule utilitaire (1) comportant au moins un feu de position latéral (11) de chaque côté (12) du véhicule latéralement à l'extérieur par référence à la direction transversale (y) du véhicule, et une unité de régulation et/ou de commande (13) étant prévue pour réguler et/ou commander l'allumage des feux de position latéraux (11), l'unité de régulation et/ou de commande (13) étant commutée en cas de situation de détresse du véhicule utilitaire (1) dans un mode de détresse dans lequel les feux de position latéraux (11) sont activés de façon à afficher un signal de détresse clignotant et, si le mode de détresse est désactivé et qu'un feu de croisement du véhicule utilitaire est allumé, l'unité de régulation et/ou de commande (13) commutant automatiquement dans un mode de base dans lequel les feux de position latéraux (11) sont activés de façon à afficher un signal lumineux permanent,
le véhicule utilitaire (1) comportant un dispositif de charge et/ou de décharge (3) permettant de charger et/ou décharger le véhicule utilitaire (1), et
un processus de charge et/ou de décharge du véhicule utilitaire (1) formant une situation de détresse,
une unité de reconnaissance de charge et/ou de décharge (15) étant prévue qui permet de reconnaître et/ou détecter un processus de charge et/ou de décharge du véhicule utilitaire (1),
l'unité de régulation et/ou de commande (13) commutant automatiquement dans le mode de détresse lorsqu'un processus de charge et/ou de décharge est reconnu et/ou détecté, et
le dispositif de charge et/ ou de décharge (3) comportant une unité de régulation de niveau (21) qui permet de régler le niveau du véhicule utilitaire d'une manière définie à partir d'une position de base afin de charger et/ou décharger le véhicule utilitaire (1).

2. Procédé selon la revendication 1, **caractérisé en ce que** le niveau actuel du véhicule utilitaire peut être déterminé au moyen de l'unité de reconnaissance de charge et/ou de décharge (15).

3. Procédé selon la revendication 2, **caractérisé en ce que** le niveau actuel du véhicule utilitaire peut être déterminé au moyen de l'unité de reconnaissance de charge et /ou de décharge (15) par le biais d'au moins une valeur de pression hydraulique et/ou pneumatique actuelle de l'unité de régulation de niveau à actionnement hydraulique et/ou pneumatique (21), l'unité de reconnaissance de charge et/ou de décharge (15) étant de préférence prévue pour comporter une unité de mesure (33) permettant de mesurer au moins une valeur de pression hydraulique et/ou pneumatique actuelle.

4. Procédé selon l'une des revendications précédentes, **caractérisé en ce que**, afin de charger le véhicule utilitaire (1), au moins une unité de transport (5, 27), notamment un conteneur, placée au niveau d'une aire de placement (25) disposée à l'extérieur du véhicule utilitaire (1) est placée et/ou disposée sur une surface de charge (23) du véhicule utilitaire (1) au moyen du dispositif de charge et/ou de décharge (3).

5. Procédé selon la revendication 4, **caractérisé en ce que**, afin de charger le véhicule utilitaire (1), le niveau du véhicule utilitaire, à partir de la position de base, est d'abord abaissé au moyen de l'unité de régulation de niveau (21) de façon à amener ensuite le véhicule utilitaire (1) avec sa surface de charge (23) au-dessous de l'unité de transport (27) placée dans la zone de placement (25) et à élever enfin à nouveau le niveau du véhicule utilitaire jusqu'à la position de base par réception de l'unité de transport (27) au moyen de l'unité de régulation de niveau (21), l'unité de régulation et/ou de commande (13) étant de préférence prévue pour commuter automatiquement dans le mode de détresse immédiatement après ou pendant l'abaissement du niveau du véhicule utilitaire et repasser dans la position de base du mode de détresse au plus tard après relèvement du niveau du véhicule utilitaire.

6. Procédé selon la revendication 4 ou 5, **caractérisé en ce que**, afin de décharger le véhicule utilitaire (1), le niveau du véhicule utilitaire est d'abord abaissé à partir de la position de base par placement d'une unité de transport (27), disposée sur la surface de charge (23) du véhicule utilitaire (1), au niveau de la zone de placement (25) au moyen de l'unité de régulation de niveau (21), **en ce que** le véhicule utilitaire (1) est ensuite éloigné de la zone de placement (25) et **en ce que** le niveau du véhicule utilitaire est enfin à nouveau relevé jusqu'à la position de base au moyen de l'unité de régulation de niveau (21), l'unité de régulation et/ou de commande (13) étant de préférence prévue pour commuter automatiquement dans le mode de détresse au plus tard lorsque le niveau du véhicule utilitaire est abaissé et repasser dans la position de base au plus tard après relèvement du niveau du véhicule utilitaire.

7. Procédé selon l'une des revendications 2 à 6, **caractérisé en ce qu'**une unité d'actionnement (35), notamment un bouton et/ou un commutateur, actionnable par le conducteur du véhicule utilitaire (1), est prévu qui permet, lorsqu'il est actionné, de ramener le niveau réglé du véhicule utilitaire dans la position de base, l'unité de régulation et/ou de commande (13) désactivant automatiquement le mode de détresse lorsque l'unité d'actionnement (35) est actionnée.

8. Procédé d'assistance au conducteur d'un véhicule utilitaire, le véhicule utilitaire (1) comportant au moins un feu de position latéral (11) de chaque côté (12) du véhicule latéralement à l'extérieur par référence à la direction transversale (y) du véhicule, et une unité de régulation et/ou de commande (13) étant prévue pour réguler et/ou commander l'allumage des feux de position latéraux (11), l'unité de régulation et/ou de commande (13) étant commutée en cas de situation de détresse du véhicule utilitaire (1) dans un mode de détresse dans lequel les feux de position latéraux (11) sont activés de façon à afficher un signal de détresse clignotant et, si le mode de détresse est désactivé et qu'un feu de croisement du véhicule utilitaire est allumé, l'unité de régulation et/ou de commande (13) commutant automatiquement dans un mode de base dans lequel les feux de position latéraux (11) sont activés de façon à afficher un signal lumineux permanent,
le véhicule utilitaire (1) comportant un dispositif de charge et/ou de décharge (3) permettant de charger et/ou décharger le véhicule utilitaire (1), et
un processus de charge et/ou de décharge du véhicule utilitaire (1) formant une situation de détresse,
une unité de reconnaissance de charge et/ou de décharge (15) étant prévue qui permet de reconnaître et/ou détecter un processus de charge et/ou de décharge du véhicule utilitaire (1),
l'unité de régulation et/ou de commande (13) commutant automatiquement dans le mode de détresse lorsqu'un processus de charge et/ou de décharge est reconnu et/ou détecté, et
le dispositif de charge et/ ou de décharge (3) comportant une unité de régulation de niveau (21) qui permet de régler le niveau du véhicule utilitaire d'une manière définie à partir d'une position de base afin de charger et/ou décharger le véhicule utilitaire (1),
une unité d'actionnement (9), actionnable par le conducteur du véhicule utilitaire, étant prévu qui permet, lorsqu'elle est actionnée, d'activer une unité de génération de pression (7) du dispositif de charge et/ou de décharge actionnable hydrauliquement et/ou pneumatiquement (3) pour générer une pression hydraulique et/ou pneumatique.

9. Procédé selon la revendication 8, **caractérisé en ce que**, lorsque l'unité de génération de pression (7) est activée, l'unité de régulation et/ou de commande (13) commute automatiquement dans le mode de détresse et/ou **en ce que**, lorsque l'unité de génération de pression (7) est désactivée, l'unité de régulation et/ou de commande (13) désactive automatiquement le mode de détresse.

10. Procédé selon l'une des revendications précédentes, **caractérisé en ce que**, pour décharger le véhicule utilitaire (1), au moins une unité de transport (5, 27), en particulier un conteneur, disposée sur une surface de charge (23) du véhicule utilitaire (1), est placée au niveau d'une zone de placement (25) disposée à l'extérieur du véhicule utilitaire (1) au moyen de l'unité de charge et/ou de décharge (3).

11. Procédé selon l'une des revendications précédentes, **caractérisé en ce qu'**une unité d'actionnement (17), en particulier un bouton et/ou un commutateur, actionnable par le conducteur du véhicule utilitaire, est prévue qui permet, lorsqu'elle est actionnée, d'activer et de désactiver un système de détresse (19) du véhicule utilitaire (1).

12. Procédé selon la revendication 11, **caractérisé en ce que**, lorsque le système de détresse (19) est activé, l'unité de régulation et/ou de commande (13) commute automatiquement dans le mode de détresse et/ou **en ce que** l'unité de régulation et/ou de commande (13) désactive automatiquement le mode de détresse lorsque le système de détresse (19) est désactivé.

13. Procédé selon l'une des revendications précédentes, **caractérisé en ce qu'**une unité d'actionnement (17), en particulier un bouton et/ou un commutateur, actionnable par le conducteur du véhicule utilitaire (1), est prévue qui permet, lorsqu'elle est actionnée, de commuter l'unité de régulation et/ou de commande (13) dans le mode de détresse et/ou de désactiver le mode de détresse.

14. Véhicule utilitaire destiné à mettre en oeuvre un procédé selon l'une des revendications 1 ou 8,
le véhicule utilitaire (1) comportant au moins un feu de position latéral (11) de chaque côté (12) du véhicule latéralement à l'extérieur par référence à la direction transversale (y) du véhicule, et une unité de régulation et/ou de commande (13) étant prévue pour réguler et/ou commander l'allumage des feux de position latéraux (11), l'unité de régulation et/ou de commande (13) étant commutée en cas de situation de détresse du véhicule utilitaire (1) dans un mode de détresse dans lequel les feux de position latéraux (11) sont activés de façon à afficher un signal de détresse clignotant et, si le mode de détresse est désactivé et qu'un feu de croisement du véhicule utilitaire est allumé, l'unité de régulation et/ou de commande (13) commutant automatiquement dans un mode de base dans lequel les feux de position latéraux (11) sont activés de façon à afficher un signal lumineux permanent,
le véhicule utilitaire (1) comportant un dispositif de charge et/ou de décharge (3) permettant de charger et/ou décharger le véhicule utilitaire (1), et
un processus de charge et/ou de décharge du véhicule utilitaire (1) formant une situation de détresse,
une unité de reconnaissance de charge et/ou de décharge (15) étant prévue qui permet de reconnaître et/ou détecter un processus de charge et/ou de décharge du véhicule utilitaire (1),
l'unité de régulation et/ou de commande (13) commutant automatiquement dans le mode de détresse lorsqu'un processus de charge et/ou de décharge est reconnu et/ou détecté, et
le dispositif de charge et/ ou de décharge (3) comportant une unité de régulation de niveau (21) qui permet de régler le niveau du véhicule utilitaire d'une manière définie à partir d'une position de base afin de charger et/ou décharger le véhicule utilitaire (1),
une unité d'actionnement (9), actionnable par le conducteur du véhicule utilitaire, étant prévu qui permet, lorsqu'elle est actionnée, d'activer une unité de génération de pression (7) du dispositif de charge et/ou de décharge actionnable hydrauliquement et/ou pneumatiquement (3) pour générer une pression hydraulique et/ou pneumatique.
